Europäisches Patentamt

European Patent Office

Office européen des brevets

(19)

(11) Numéro de publication: **0 266 251 B1**

(12)

# FASCICULE DE BREVET EUROPEEN

(45) Date de publication de fascicule du brevet:
**12.06.91**

(51) Int. Cl.⁵: **H02K 44/06**

(21) Numéro de dépôt: **87402260.1**

(22) Date de dépôt: **09.10.87**

(54) **Pompe électromagnétique à induction.**

(30) Priorité: **17.10.86 FR 8614451**

(43) Date de publication de la demande:
**04.05.88 Bulletin 88/18**

(45) Mention de la délivrance du brevet:
**12.06.91 Bulletin 91/24**

(84) Etats contractants désignés:
**BE DE GB IT**

(56) Documents cités:
**EP-A- 0 131 061**
**DE-A- 2 433 469**
**FR-A- 1 189 659**

(73) Titulaire: **COMMISSARIAT A L'ENERGIE ATO-MIQUE Etablissement de Caractère Scientifique Technique et Industriel**
**31/33, rue de la Fédération**
**F-75015 Paris(FR)**

(72) Inventeur: **Blanc, Raymond**
**724 Chemin de la Source**
**F-04100 Manosque(FR)**

(74) Mandataire: **Mongrédien, André et al**
**c/o BREVATOME 25, rue de Ponthieu**
**F-75008 Paris(FR)**

## Description

La présente invention a pour objet une pompe électromagnétique à induction utilisée pour le pompage des métaux liquides et en particulier du mercure.

Les pompes électromagnétiques comprennent toutes un conduit dans lequel s'écoule le métal liquide, un moyen de créer un champ magnétique perpendiculaire à la direction de l'écoulement et un moyen de créer un courant électrique perpendiculaire à la fois à la direction de l'écoulement et à la direction du champ magnétique : les forces de Laplace engendrées provoquent l'écoulement du métal liquide. Des pompes électromagnétiques à induction sont décrites dans EP-A- 131061 et FR-A-1189659.

Dans les pompes électromagnétiques à induction, qui seules nous intéressent ici, le courant électrique primaire ne passe pas par le métal liquide mais engendre un courant induit à l'intérieur de celui-ci.

Parmi ces pompes, les plus intéressantes sont les pompes annulaires, appelées ainsi d'après la section du conduit d'écoulement. Les parois de la conduite sont constituées de deux cylindres concentriques, et une partie de la culasse magnétique se trouve l'intérieur du cylindre intérieur l'autre partie est disposée à l'extérieur du cylindre extérieur.

La partie du conduit d'écoulement disposé dans le champ magnétique doit être en un matériau à la fois amagnétique et résistant aux métaux liquides généralement très corrosifs. Généralement, on emploie l'acier inoxydable qui ne convient pas pour le mercure notamment lorsqu'il renferme certaines impuretés telles que la soude et le chlorure de sodium susceptibles d'être introduits lors de réactions d'électrolyse.

La présente invention concerne donc une nouvelle réalisation de ces parois de conduits d'écoulement de pompes électromagnétiques dans laquelle l'acier inoxydable est remplacé par un matériau organique d'inertie chimique suffisante pour ne pas réagir avec le mercure et les impuretés mentionnées plus haut. A cette fin, on peut préconiser le Téflon qui possède en outre une faible adhérence par frottement.

La mise en service de l'invention nécessite toutefois de tendre ces parois à cause de la souplesse des matériaux organiques : la déformation et l'obstruction du conduit sont ainsi évitées. On y parvient simplement en exerçant une traction sur des brides de serrage des extrémités des parois du conduit.

De façon plus générale, l'invention concerne une pompe électromagnétique à induction comprenant un corps de pompe contenant un circuit magnétique et un bobinage électrique, caractérisée en ce qu'elle comprend un conduit de pompage délimité par deux parois concentriques en un matériau organique chimiquement inerte avec le liquide pompé, ainsi que des moyens pour tendre les parois sur le corps de pompe.

Ces moyens pour tendre les parois peuvent être constitués de vis prenant appui sur une pièce d'appui fixe, directement ou par l'intermédiaire d'un ressort ; le réglage de la tension est évidemment plus fin et graduel dans ce cas.

D'autres caractéristiques et avantages de l'invention apparaîtront encore à la lecture de la description qui suit d'un exemple de réalisation donnée à titre illustratif et non limitatif, en référence aux dessins annexés, sur lesquels :

- la figure 1 est une coupe longitudinale d'une pompe annulaire électromagnétique selon l'invention ;
- la figure 2 est une représentation partielle et agrandie de la figure 1 ;
- la figure 3 est une représentation partielle et agrandie d'un autre mode de réalisation de l'invention ;
- les figures 4, 5 et 6 sont des sections transversales de la pompe de la figure 1 selon les lignes IV-IV, V-V et VI-VI représentées respectivement sur la figure 2.

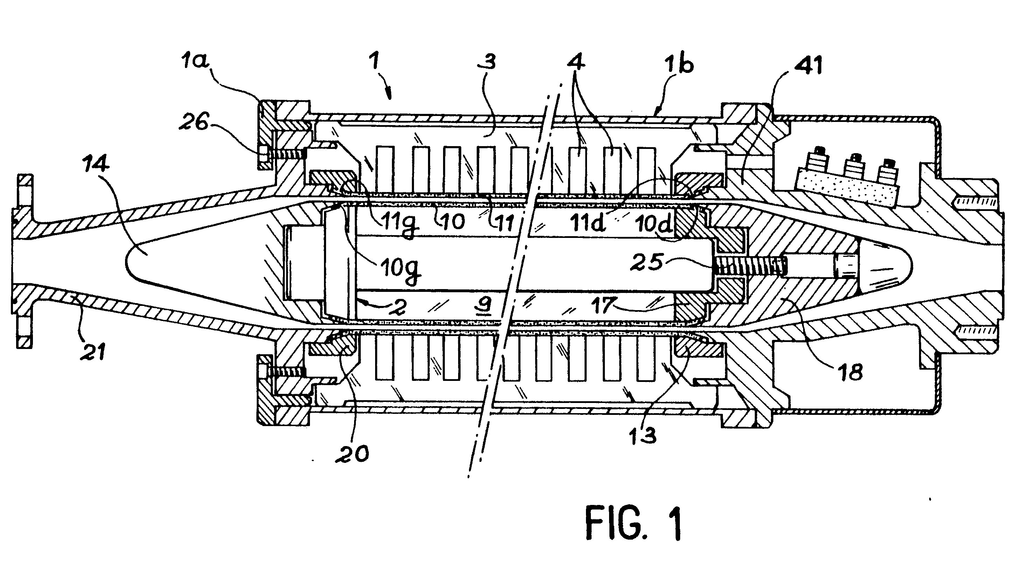

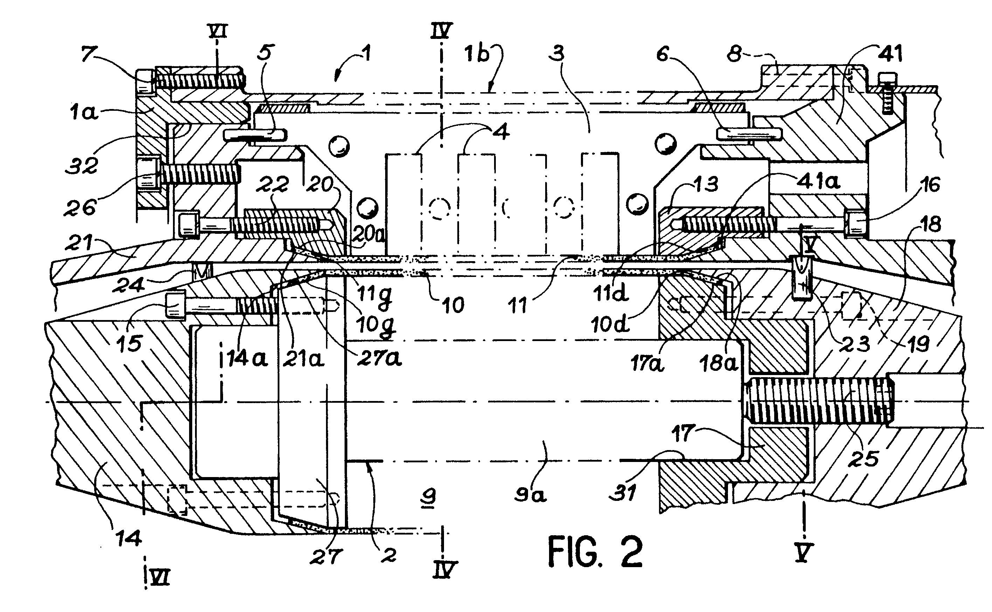

Comme on le voit sur les figures 1 et 2, la pompe comprend principalement un corps extérieur 1 et un corps intérieur 2 ; le corps extérieur 1 est en fait formé de plusieurs pièces démontables et comprend notamment une couronne 1a de centrage d'un manchon d'entrée 21 et un manchon de sortie 41 qui prennent appui respectivement aux extrémités de la virole de protection 1b avec laquelle ils sont rendus solidaires par l'intermédiaire de deux séries de vis 7 et 8. Une culasse magnétique extérieure 3 munie de bobinages 4 est montée coaxialement à l'intérieur de la virole de protection 1b au moyen de pions de centrage 5 et 6 qui sont également insérés respectivement dans le manchon d'entrée 21 et le manchon de sortie 41.

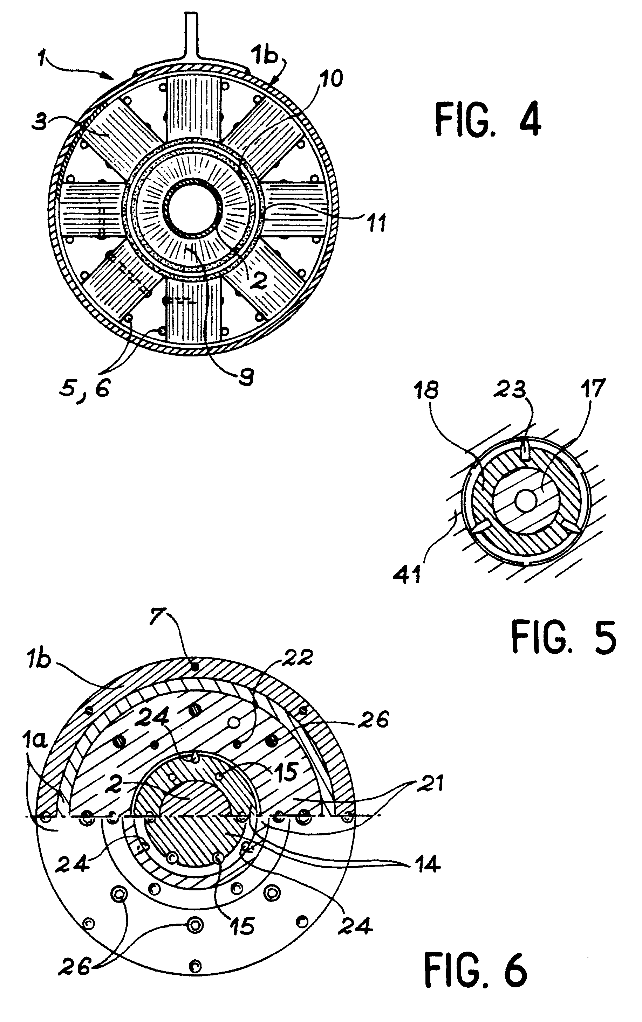

Le corps de pompe intérieur 2 maintient en place axialement et radialement un noyau magnétique central 9 qui est coaxial à la culasse magnétique extérieure 3, comme on le voit encore mieux figure 4. C'est dans l'espace annulaire entre ces pièces magnétiques qu'on établit le conduit de métal liquide, dont les parois qui le délimitent sont constituées de deux tubes concentriques 10 et 11 en matériau organique ajustés et tendus respectivement sur le noyau magnétique central 9 et la culasse extérieure 3. L'une des extrémités du noyau magnétique central 9, ici celle orientée vers le manchon de sortie 41 est constituée par une pièce coulissante 17 et les deux extrémités du corps de pompe intérieur 2 sont formées par deux brides 18 et 14 en forme d'ogive coulissant axialement autour de la pièce coulissante 17 et de l'autre extrémité 27 du noyau magnétique 9.

Selon une caractéristique essentielle de l'invention, les extrémités 10g et 10d d'un tube intérieur 10 sont chacune pincées respectivement entre une portée conique 17a, 27a des extrémités 17, 27 du noyau magnétique central 9 et une portée conique 18a, 14a des brides en forme d'ogive 18, 14 au moyen d'une série de vis 19 et 15 ; les extrémités 11g et 11d d'un tube extérieur 11, concentrique au tube 10 et délimitant avec lui un conduit annulaire d'écoulement du métal liquide, sont chacune pincées respectivement entre une portée conique 21a, 41a du manchon d'entrée 21 et du manchon de sortie 41 et une portée conique 20a, 13a d'une bride de serrage 20, 13 au moyen d'une série de vis 22 et 16.

Le pincement des extrémités des tubes 10 et 11 assure l'étanchéité du conduit à la jonction des tubes 10 et 11 avec les brides en forme d'ogive 14 et 18 d'une part et les manchons 21 et 41 d'autre part.

Les deux groupes de pièces situées à l'intérieur et à l'extérieur du conduit d'écoulement du métal liquide sont rendus solidaires axialement et radialement au moyen de deux séries de pions de positionnement 23 et 24 disposées en couronne entre respectivement le manchon de sortie 41 et une bride en forme d'ogive 18, et entre l'autre bride en forme d'ogive 14 et le manchon d'entrée 21 ; ces pièces prolongent par conséquent le conduit d'écoulement du liquide de part et d'autre des tubes 10 et 11 et permettent ainsi le raccordement avec le reste du circuit fluide.

Tel qu'il a été décrit jusqu'ici, le montage des tubes 10 et 11 n'est pas suffisant, car des efforts importants sont susceptibles de s'exercer sur eux et de conduire, notamment en cas de mauvais montage des pièces enserrant les extrémités de ces tubes, au gondolement et au flambement des tubes 10 et 11 qui sont constitués d'un matériau organique beaucoup plus souple que l'acier.

Le fonctionnement de la pompe serait alors défectueux ou même totalement interrompu en cas d'obstruction du conduit d'écoulement.

C'est pourquoi il est nécessaire de tendre les tubes 10 et 11. On y parvient avec simplicité en disposant des vis de mise en traction entre les brides de serrage d'une extrémité de chaque tube et le corps correspondant : d'après la figure 2, une vis 25 filetée sur la bride en forme d'ogive 18 et portant sur le corps axial 9a du noyau magnétique 9 permet de modifier la distance entre ces deux pièces. La pièce coulissante 17, solidaire de la bride en forme d'ogive 18, glisse donc sur la portée cylindrique de centrage 31 entre la pièce coulissante 17 et le corps axial 9a. Le tube intérieur 10 est tendu par traction sur son extrémité 10d orientée vers la sortie. Suivant le même principe, une série de vis 26 permettent de modifier la distance entre le manchon d'entrée 21 et la couronne 1a, solidaire de la virole de protection 1b, par glissement sur une portée cylindrique de centrage 32 entre ces deux pièces. Le tube extérieur 11 est donc tendu par traction sur son extrémité 11g orientée vers l'entrée.

Les figures 4, 5 et 6 donnent une idée plus complète de la pompe selon cette réalisation de l'invention.

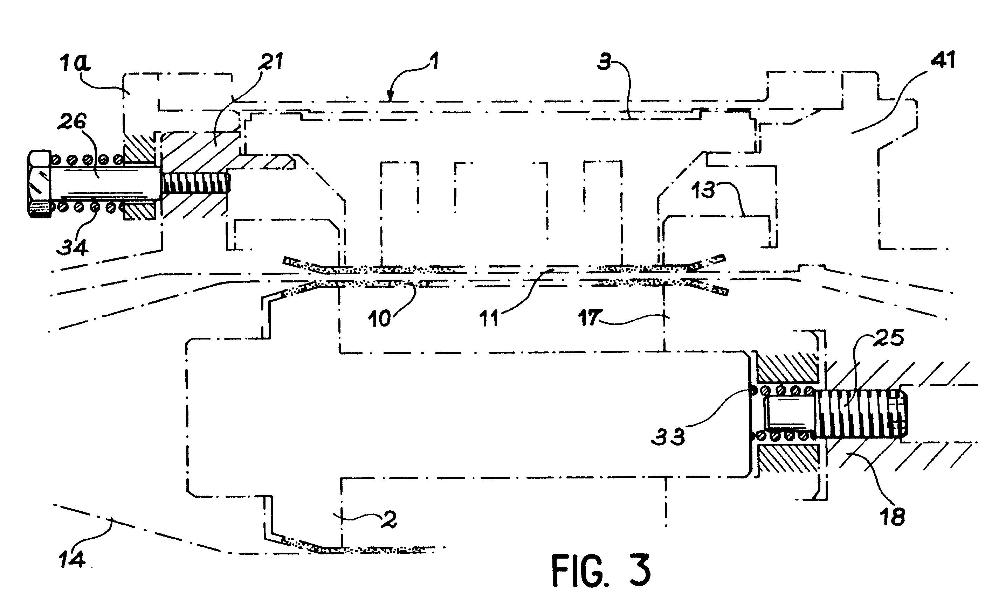

Il est toutefois possible d'apporter une amélioration importante au dispositif de serrage, que représente la figure 3. L'action des vis 25 et 26 s'exerce dans ce cas par l'intermédiaire de ressorts à boudin 33 et 34 qui sont insérés autour de ces vis et comprimés entre une portée sur la vis 25 et le corps axial 9a pour le ressort 33, entre une portée sur les vis 26 et la couronne 1a pour les ressorts 34. Dans cette réalisation, il n'y a pas de contact direct entre la vis 25 et le corps axial 9a, pas plus qu'entre les vis 26 et la couronne 1a.

L'effort de tension peut donc être introduit beaucoup plus progressivement, ce qui est très utile dans le cas de tubes 10 et 11 en matériau peu ductile et relativement peu résistant tels que les polymères que l'on peut préconiser car ils sont chimiquement inertes au mercure, au sodium et à leurs impuretés, avec une préférence pour le Téflon qui présente un coefficient de frottement très bas.

La pompe selon l'invention est donc susceptible d'être utilisée pour le pompage des métaux liquides température ambiante ou un peu supérieure à cette température, la limite étant liée aux propriétés thermiques du matériau choisi pour les tubes 10 et 11. La grande résistance de cette pompe à la corrosion de ces métaux et des impuretés qu'ils véhiculent doit lui conférer une durée de vie importante dans les installations industrielles où elle est susceptible d'être utilisée.

**Revendications**

1. Pompe électromagnétique à induction comprenant un corps de pompe (2, 1) contenant un circuit magnétique (3, 9) et un bobinage électrique (4), caractérisée en ce qu'elle comprend un conduit de pompage délimité par deux parois concentriques en un matériau organique (10, 11) chimiquement inerte avec le liquide pompé, ainsi que des moyens (14, 18, 13, 20, 25, 26) pour tendre les parois (10, 11) sur le corps de pompe (2, 1).

2. Pompe électromagnétique induction selon la revendication 1, caractérisée par le fait que les moyens pour tendre les parois (10, 11) sont constitués par des vis de pression (25, 26) engagées dans des taraudages de pièces (18, 21) solidaires d'une extrémité (10d, 11g) d'une paroi (10 ,11) et prenant appui sur des pièces d'appui fixes (1a, 9a).

3. Pompe électromagnétique selon la revendication 1, caractérisée par le fait que les moyens pour tendre les parois (10, 11) sont constitués par des vis de pression (25, 26) engagées dans des taraudages de pièces (18, 21) solidaires d'une extrémité (10d, 11g) d'une paroi (10, 11) et agissant sur des pièces d'appui fixes (1a, 9a) par l'intermédiaire d'un ressort (33, 34) disposé sur une portée des vis (25, 26).

## Claims

1. Electromagnetic induction pump comprising a pump body (2, 1), containing a magnetic circuit (3, 9) and an electric winding (4), characterised in that it comprises a pumping duct defined by two concentric walls made from an organic material (10, 11) chemically inert with respect to the pumped liquid, and means (14, 18, 13, 20, 25, 26) for tensioning the walls (10, 11) on the pump body (2, 1).

2. Electromagnetic induction pump according to Claim 1, characterised in that the means for tensioning the walls (10, 11) consist of pressure screws (25, 26) engaged in tapped holes of parts (18, 21) integrally connected to one end (10d, 11g) of a wall (10, 11) and bearing on fixed support parts (1a, 9a).

3. Electromagnetic pump according to Claim 1, characterised in that the means for tensioning the walls (10, 11) consist of pressure screws (25, 26) engaged in tapped holes of parts (18, 21) integrally connected to one end (10d, 11g) of a wall (10, 11) and acting on fixed support parts (1a, 9a) via a spring (33, 34) arranged on a bearing surface of the screws (25, 26).

## Ansprüche

1. Elektromagnetische Induktionspumpe, enthaltend einen Pumpenkörper (2, 1), der einen Magnetkreis (3, 9) und eine elektrische Wicklung (4) enthält, **dadurch gekennzeichnet,** daß sie eine Pumpleitung enthält, die von zwei konzentrischen Wänden (10, 11) aus einem organischen, gegenüber der gepumpten Flüssigkeit chemisch inerten Material bestehen, sowie Einrichtungen (14, 18, 13, 20, 25, 26) zum Spannen der Wände (10, 11) auf den Pumpenkörper (2, 1) enthält.

2. Elektromagnetische Induktionspumpe nach Anspruch 1, **dadurch gekennzeichnet,** daß die Einrichtungen zum Spannen der Wände (10, 11) von Druckschrauben (25, 26) gebildet sind, die in die Gewindegänge von Teilen (18, 21) eingeschraubt sind, die fest mit einem Ende (10d, 11d) einer Wand (10, 11) verbunden sind, und die an festen Anschlagteilen (1a, 9a) anliegen.

3. Elektromagnetische pumpe nach Anspruch 1, **dadurch gekennzeichnet,** daß die Einrichtungen zum Spannen der Wände (10, 11) von Druckschrauben (25, 26) gebildet sind, die in Gewindegänge von Teilen (18, 21) eingeschraubt sind, die fest mit einem Ende (10d, 11) einer Wand (10, 11) verbunden sind, und die auf feste Anschlagteile (1a, 9a) über eine Feder (33, 34) einwirken, die sich an einer Abstützfläche an den Schrauben (25, 26) abstützen.

EP 0 266 251 B1

FIG. 1

FIG. 2

EP 0 266 251 B1

FIG. 3

EP 0 266 251 B1

FIG. 4

FIG. 5

FIG. 6